# EUROPEAN PATENT APPLICATION

(11) **EP 1 519 502 A1**
(43) Date of publication of application: **30.03.2005**
(21) Application number: 03292345.0
(22) Date of filing: 25.09.2003
(51) Int. Cl.: H04B 10/207, H04B 10/17

(54) **Passive optical WDM network with individual channel amplification**

(71) Applicant: ALCATEL, 75008 Paris (FR)
(72) Inventor: Pfeiffer, Thomas, Dr., 70569 Stuttgart (DE)
(74) Representative: Rausch, Gabriele, Dr.

(57) **Abstract**

The invention is related to a passive optical network with a central station and at least one remote station, the stations are connected via a downstream link and a upstream link. The remote station is connected with subscriber unit that comprises receiving and transmitting devices for wavelength multiplexed optical signals over fiber links. The remote station comprises a fiber amplifier with a demultiplexer parallel arranged amplification fibers linked to a pump laser source wherein the output links of the amplification fibers are connected to related subscriber units.

## Description

### Background of the Invention

The invention is related to a passive optical network with a central station and at least one remote station, the stations are connected via a downstream link and a upstream link, the remote station is connected with subscriber unit comprising receiving and transmitting means for wavelength multiplexed optical signals over fiber links.

Wavelength division multiplexed (WDM) passive optical subscriber networks (PON's) offer the potential of large capacity, network security, and upgradability. However, these prior networks require low-cost sources, and efficient routing at the central office and remote nodes for practical implementation.
Generally, optical subscriber networks minimize the number of optical lines by using double-star structure. Namely, a connection between a central station and a remote station placed at the neighboring area of subscribers is made by one optical fiber, and connections between the remote station and each subscriber are made by individual optical fiber. Wavelength division multiplexed mode, in which each subscriber uses different wavelength from each other, can distinguish each subscriber using wavelength. The central station and remote stations, therefore, need both a multiplexing apparatus that multiplexes wavelength divided optical signals and a demultiplexing apparatus that demultiplexes multiplexed optical signals. Such apparatuses use waveguide grating router (WGR) or devices with the same function as it.

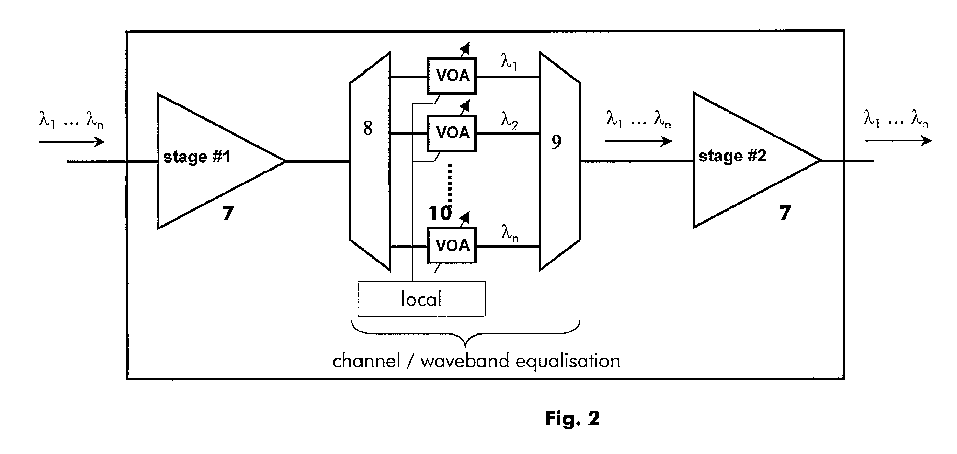

A passive optical network is described in the US 6597482, with a central office a remote node and subscriber units. In the central office a fiber amplifier is installed to amplify the transmitted signal wavelengths from the subscribers. For the downstream signal no amplification is foreseen in this solution.
The amplifier used is commonly a fiber amplifier according the state of the art as described in figure 2. The incoming signal is amplified by a first stage of amplification 7. Then the incoming signal is demultiplexed in a demultiplexer 8 and multiplexed via a multiplexer 9. Between the demultiplexer and the multiplexer variable optical attenuators are installed for each wavelength of the wavelength multiplex. At the output of the multiplexer 9 the second amplification stage 7 is connected. The variable optical attenuators 10 allow the equalization of the channels power.
A channel means one of the wavelengths of the wavelength multiplex. This solution generates a mutual interdependence of channel gain and output power of the channels. The input dynamic range is limited to achieve a wavelength independency on the output level. A device as described arise a power and gain transients when one channel of the wavelength multiplex is dropped or added.
This commonly used amplifier scheme is adapted to work in a station with active power control. The control of the adjustment procedure is possible for example in a central station but will be not realistic in a remote unit. In a passive optical network a power supply in a remote unit is not foreseen. A power consuming adjustment device cannot be installed in the passive part of the network.

Another solution for a flat gain in an optical fiber amplifier is disclosed by US 6069731.Here the input signal is switched between several parallel-connected optical amplification fibers and recombined by a second switch.

This allows adapting the gain of the amplifier by switching between the different parallel and different equipped stages.
The invention proposes an amplification scheme that allows to overcome the restrictions of the passive part of a PON and to avoid the problems that arise when a channel is added or dropped and allows for individual mutually independent setting of channel gain and power.

### Summary of the Invention

The passive optical network according the invention has the advantage that the amplification of the single channels is independent from each other's. For the channels are physically separated no cross gain modulation can occur. The amplifiers work without being influenced by adding or dropping channels.
With a passive network as described in the invention no complex adjustment procedures are required for input power equalization to achieve a given flat output spectrum. Gain transient do not occur when the flexible network reacts to new subscribers.
One further advantage is that for use inn a passive remote station the pump source powered in the central station.
To avoid additional cost the pump power is feed in over the data link itself. Another preferred solution is to link a separate pump source fiber link. This allows to connect and to power more than one remote station and more than one optical amplifier.

### Short Description of the Invention

The figures show examples of the solutions according the invention and the following description explains the details of the invention.
Fig 1 shows the principle of a passive fiber network
Fig. 2 shows an optical amplifier state of the art
Fig 3 shows an improved solution of an optical amplifier
Fig. 4 shows a remote unit with amplifier according the invention
Fig. 5 shows a second embodiment of the invention
Fig. 6 shows a third embodiment of the invention
Fig. 7 shows a forth embodiment of the invention.
Fig. 8 shows a solution in upstream according solution of Fig.4
Fig.9 shows a solution in upstream according solution of Fig. 5
Fig 10 shows a solution in upstream according solution of Fig.6
Fig 11 shows a solution in upstream according solution of Fig.7
Fig 12 shows an embodiment with a internal pump light source.

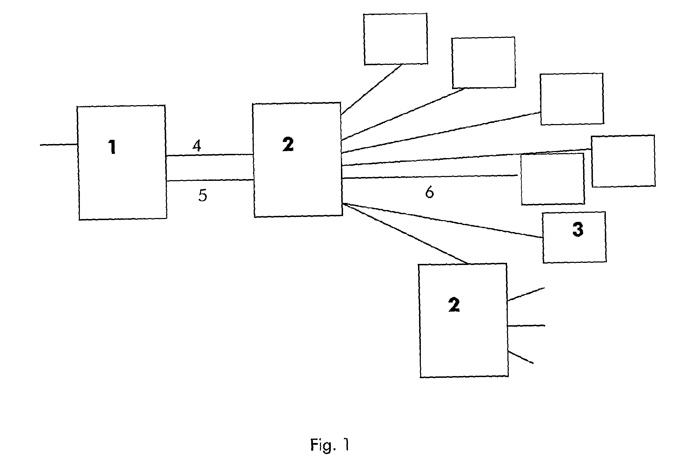

Figure 1 demonstrates a schematic passive optical network structure. Here a central station 1 with a link to a backbone network is link to one representative remote Station 2. The link is established by an upstream link 4 and a downstream link 5. This links are drawn as separate fibers but the up and downstream data traffic can also be transmitted over one fiber link. The remote station 2 has the function of a passive splitter and is connected to subscriber units 3 via separate fiber links. Not shown the figure but also a solution is a fiber link to the subscriber using two fibers.

The link between the remote station and the subscriber units 3 is a bidirectional fiber link. What also can be seen is that one remote unit s connected to another remote unit providing the information to another group of subscribers.

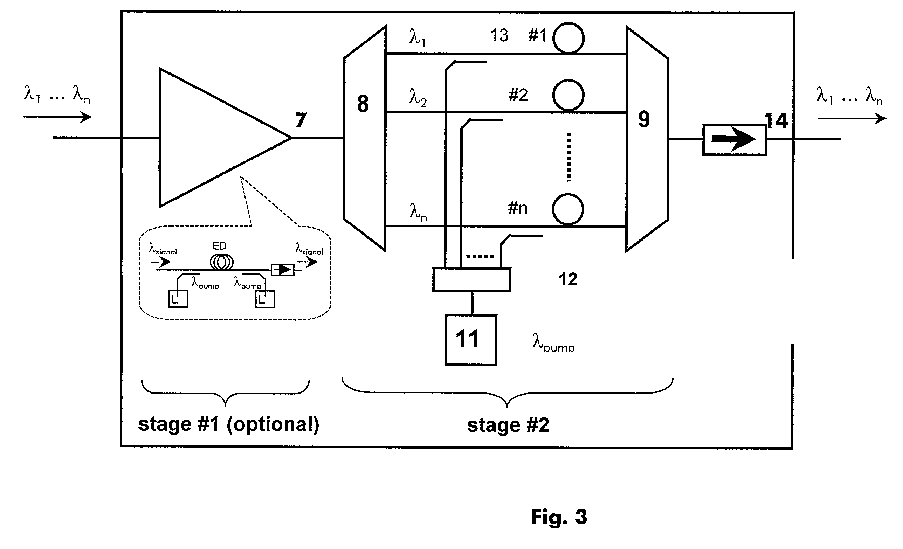

The remote unit 2 according to the invention comprises not only a passive splitter combiner, but also an "active " element, the optical fiber amplifier. The principle of the optical amplification in the remote station can be derived from figure 3. Here a first stage of amplification 7 is drawn. This is optional and the first stage is for example installed in the central station. The output of the first stage of amplification 7 is connected to a demultiplexer 8 in the remote station 2. The demultiplexer 8 separates the channels defined by separate wavelengths λ1 to λn.

These separate channels are linked via couplers to an amplifying fiber 13. In this embodiment the pump light source 11 feeds the light over a power splitter to each single amplifying fiber 13. The pump source is here installed in the remote station.. The output lines of the amplifying fibers are linked to a multiplexer and the combined signal is than leaving the remote station via an isolator 14.

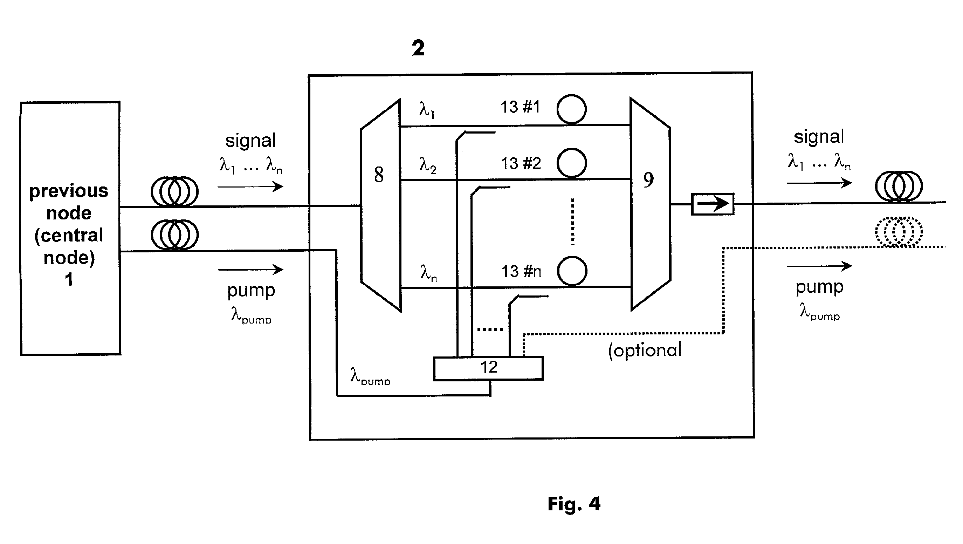

Figure 4 describes a second embodiment of the invention also with a multiplexer at the output side of the remote station 2. In this example the pump laser source is installed in the central station 1. This pump laser source in linked to the amplifier in the remote unit with a separate fiber link. The pump power is than again split over a power splitter 12 to pump all the different channels in the amplifier. An optional path is mentioned in the drawing. This pump path allows using the excessive pump light for pumping another amplifier in another remote station.

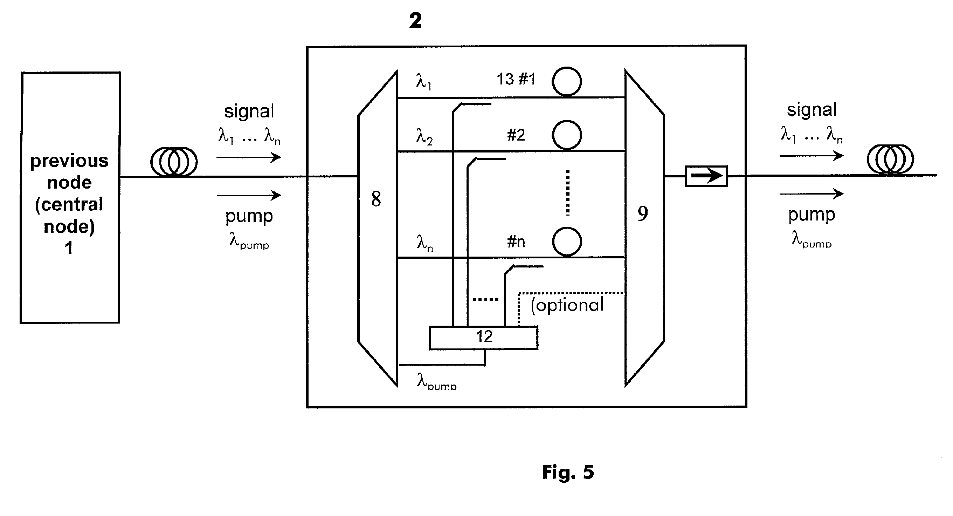

Fig. 5 shows another embodiment of the invention. Here the pump source is also installed in the central station. The pump light is fed into the data fiber link and transmitted with the data signals to the demultiplexer 8. Here the pump light is demultiplexed and fed to the power splitter 12. The pump power pumps the different lines. And again an optional path is provided that allows reusing the pump light for pumping another optical amplifier.

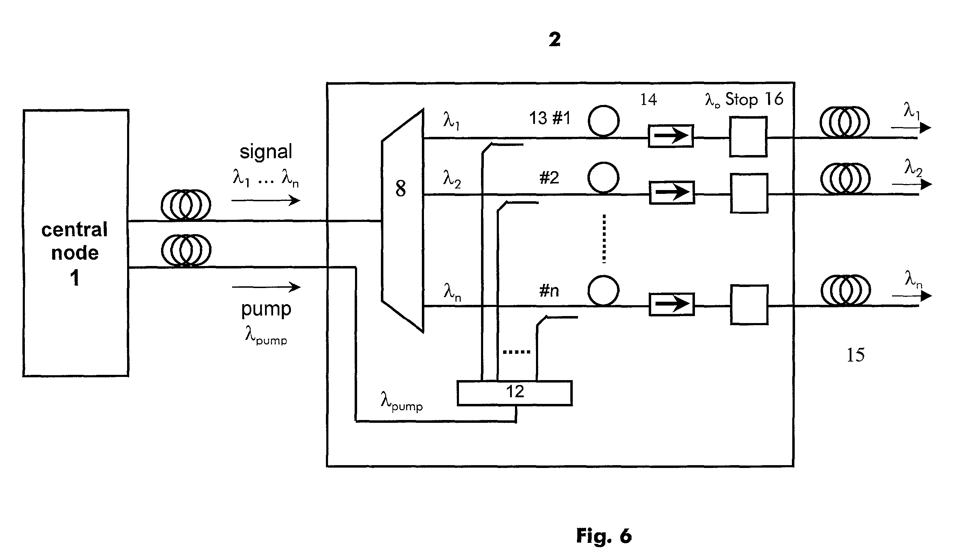

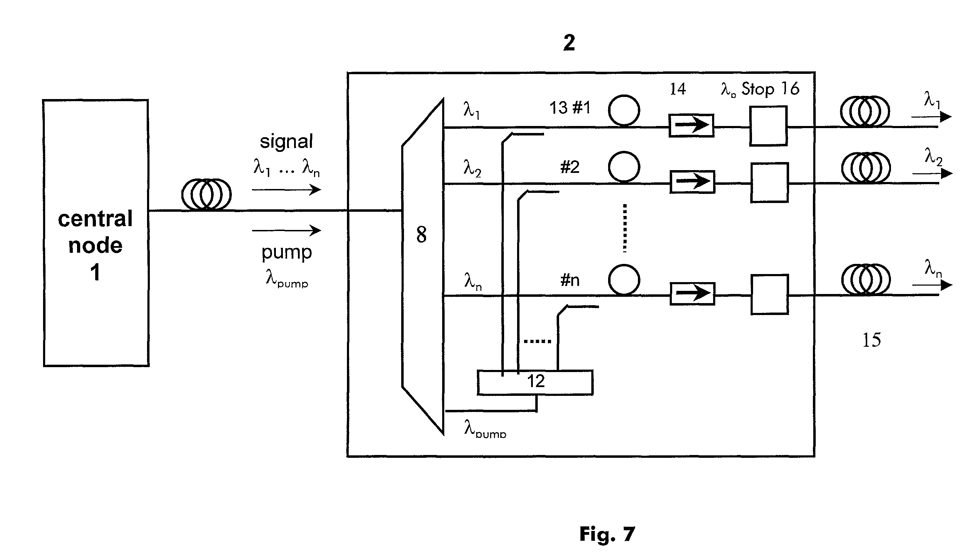

Fig. 6 and figure 7 are two embodiments without multiplexer in the remote station. The amplifier in the remote unit is pumped via a separate (figure 6) or via the data link (figure 7).
In both embodiments the amplifying fibers 13 are directly connected to the subscriber units via subscriber links 15. The signals pass a passive filtering, isolators 14 for each channels and a stop band filter 16.

To realize the invention parts are used which are known by a person skilled in the art. Demultiplexer and multiplexer are for example arrayed waveguide gratings. The amplifying fiber is a fiber doped with a rare earth element able to amplify the signals transmitted in the optical window of the fiber. For example a commonly used erbium doped fiber is used in the amplifier.

The pump source is a semiconductor laser pumping the doped amplifying fiber. For example the erbium doped fiber is pumped with 1480 nm pump light.

For signal attenuation has a comparable value for downstream and upstream channels the invention can also be applied in the upstream between subscriber and central station. The devices amplifying the signals must be adapted to the fact that for example the isolators must linked on the side of the central station.

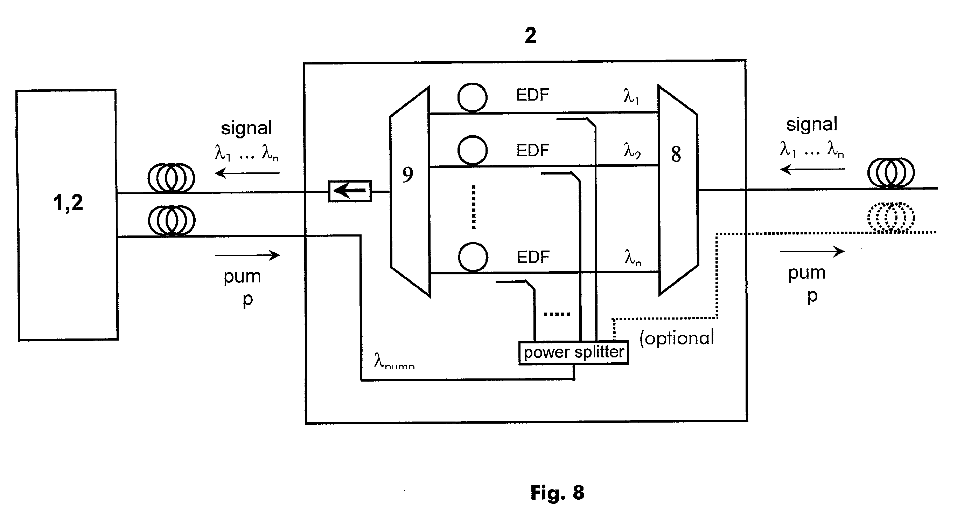

Fig 8 describes a solution in the upstream comparable with Fig. 4 in the downstream link. The structure is the same as the structure of Fig. 4 with exception of the optical isolator 14. Its position is between the remote node 2 and the previous node. The previous node for the upstream data either a next remote node 2 or a central station 1.

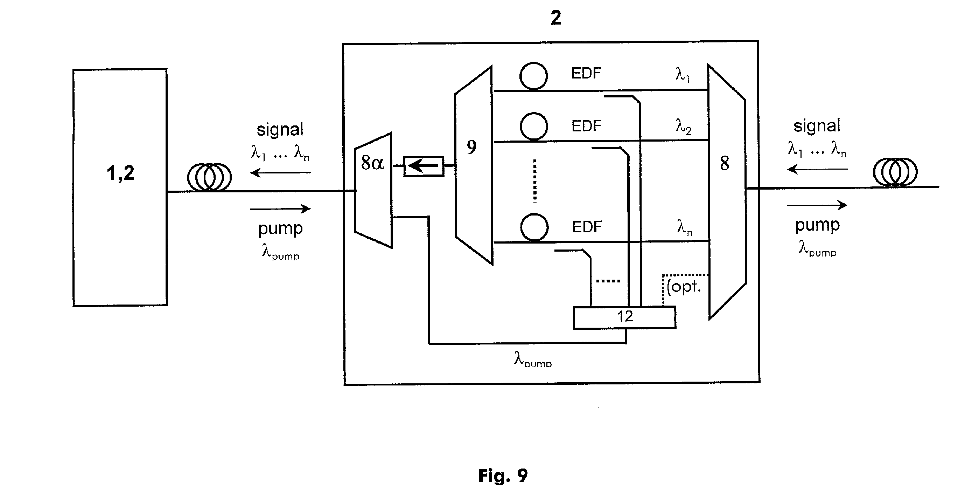

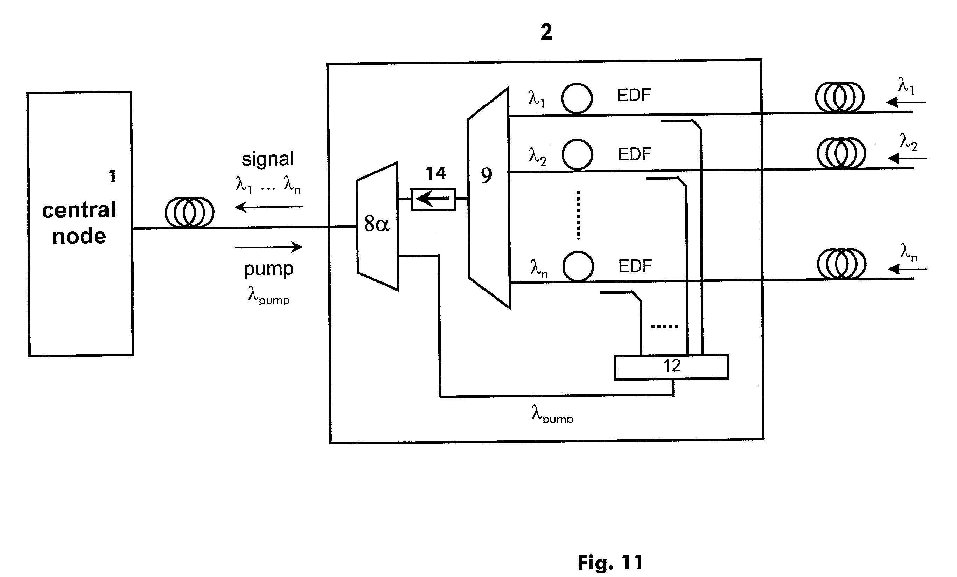

Fig. 9 described a comparable solution to Fig. 5. In the upstream solution an additional demultiplexer 8a is linked between the previous node 1, 2 and the remote node 2. This demultiplexer 8a is connected to the power splitter 12 and to the isolator 14 of the amplifier output. after the multiplexer 9. Using the one fiber solution according fig. 11 an additional modification is necessary. The pump light must extracted before entering the remote unit 2.

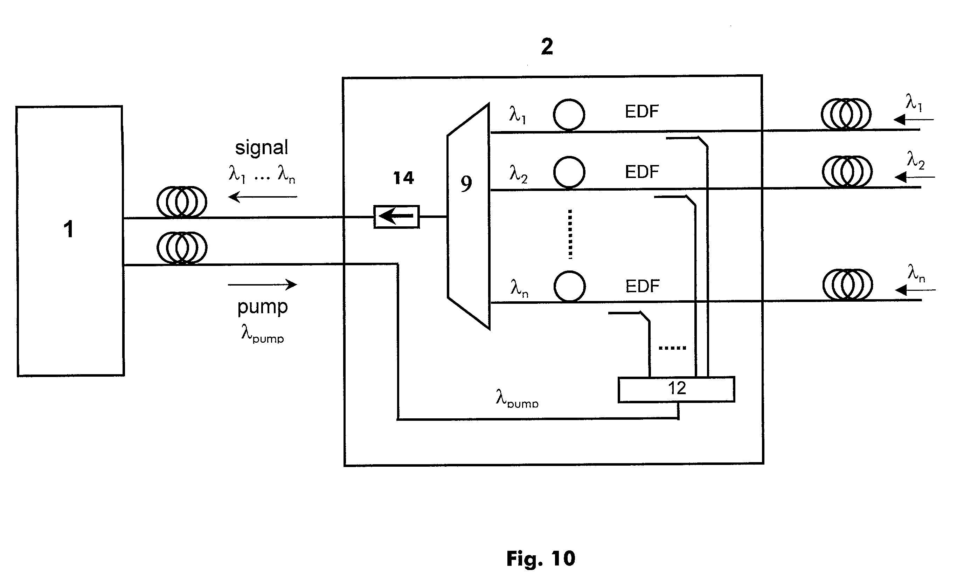

Fig. 10 shows the upstream version of Fig. 6, and Fig 11 the upstream version of Fig. 7. For the embodiment of Fig. 11 the extraction of pump light via a separate demultiplexer 8a is also necessary.

For all embodiments as discussed above the pump light source is adaptable in wavelength and power. This is realized in on e version in a pump light splitter with variable splits, or by a pump light splitter with fixed split ratio and variable attenuators at output side.

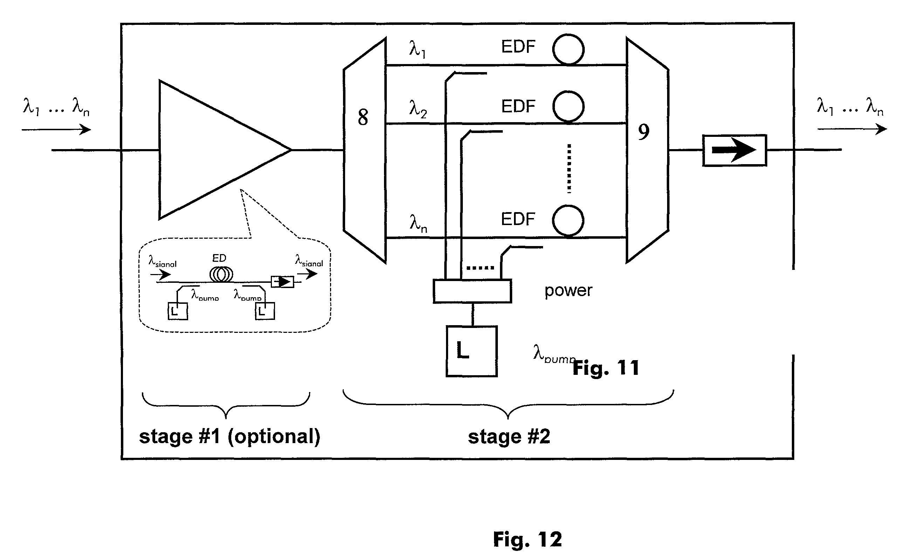

Fig. 12 is a special solution where the pump light source Is not remote in a central station but in the remote station 2. The pump light source is here connected via a splitter to the amplifying fibers. The pump light is adjustable in power by additional devices not shown in the picture.

## Claims

1. Passive optical network with a central station (1) and at least one remote station (2), the stations are connected via a downstream link (5) and a upstream link (4), the remote station (2) is connected with subscriber unit (3) comprising receiving and transmitting means for wavelength multiplexed optical signals over fiber links, **characterized in that** the remote station comprises a fiber amplifier with a demultiplexer (8) parallel arranged amplification fibers (13) linked to a pump laser source (11) and the output links of the amplification fibers (15) are connected to related subscriber units (3).

2. Passive optical network with a central station (1) and at least one remote station (2), the stations are connected via a downstream link (5) and a upstream link (4), the remote station (2) is connected with subscriber unit (3) comprising receiving and transmitting means for wavelength multiplexed optical signals over fiber links, **characterized in that** the remote station comprises a fiber amplifier with a demultiplexer (8) parallel arranged amplification fibers (13) linked to a pump laser source (11) and the output links of the amplification fibers (15) are connected to the previous station. (1,2).

3. Passive optical network according claim 1 or 2 **characterized in that** the pump laser source (11) is part of the central station (1).

4. Passive optical network according claim 1 or 2 **characterized in that** the pump laser source (11) is part of the remote station (2).

5. Passive optical network according claim 1 or 2 **characterized in that** the pump laser source (11) is adjustable in wavelength and /or power for the single amplifying fibers (13)

6. Passive optical network according claim 1 or 2 **characterized in that** the pump laser source (11) is connected to the remote station (2) and the amplification fibers via a separate fiber link and a power splitter (12).

7. Passive optical network according claim 1 or 2 **characterized in that** the pump laser source (11) is connected to the remote station (2) and the amplification fibers via the data fiber link and a power splitter (12).

8. Passive optical network according claim 1 or 2 **characterized in that** the output of the amplification fibers are connected to a multiplexer (9).

9. Passive optical network according claim 1 or 2 **characterized in that** the pump power link is feed through the remote station (2).

10. Passive optical network according claim 1 or 2 **characterized in that** the output links (15) of the amplification fiber (13) are linked to stop band filters (14).

11. Passive optical network according claim 1 **characterized in that** the central station comprises a first stage of amplification (7) and the remote station (2) a second stage of amplification (7).

12. Passive optical network according claim 1 **characterized in that** the remote station comprises a first stage of amplification (7) and a second stage of amplification (7).

13. Passive optical network according claim 1 **characterized in that** the remote unit (2) is linked to further remote units (2) and amplifiers.
